# EUROPEAN PATENT SPECIFICATION

(11) **EP 0 396 166 B1**
(45) Date of publication and mention of the grant of the patent: **18.10.1995**
(21) Application number: 90200929.9
(22) Date of filing: 17.04.1990
(51) Int. Cl.: A01B 33/08

(54) **A soil tilling machine**
Bodenbearbeitungsmaschine
Machine pour travailler le sol

(30) Priority: 24.04.1989 NL 8901016
(43) Date of publication of application: 07.11.1990
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 217 720
- FR-A- 2 287 838
- US-A- 4 044 841

## Description

The invention relates to a combination of a soil tilling machine and at least one power-drivable rotor, the soil tilling machine comprising a frame, means for mounting said power-drivable rotor, the axis of rotation of which rotor extending substantially horizontally at an angle with a line transverse to the direction of operative travel.

Machine combinations of this kind are known from e.g. EP-A-0 188 633 and are mainly used to perform one kind of soil working action, so that its use is limited.

The invention has for its object to provide a machine combination of the kind set forth, that can easily be adapted to perform various soil working actions and to work different types of soil. In accordance with the invention, the combination of the kind set forth is characterized in that it includes at least one additional power-drivable rotor of a different type, while, the connecting means for mounting said rotors in the frame being all identical to each other, and whereby, in the operative state of the machine, one of these rotors is mounted in the frame.

For a better understanding of the invention and to show how the same may be carried into effect, reference will now be made, by way of example, to some embodiments shown in the accompanying drawings, in which:
Figure 1 is a plan view of a soil tilling machine combination;
Figure 2 is a view taken in the direction of the arrow II in Figure 1;
Figure 3 is, to an enlarged scale, a view taken on the line III-III in Figure 1;
Figure 4 shows, to an enlarged scale, a first support of one end of a carrier, the said carrier being fitted with soil working members;
Figure 5 shows, to an enlarged scale, the support for a carrier fitted with soil working members;
Figure 6 shows the flanges for the connection of that end of a carrier fitted with soil working members that is located at the drive side;
Figure 7 shows a second support of the carrier fitted with soil working members;
Figure 8 shows a plan view of a soil tilling machine combination according to the invention;
Figure 9 is a view taken in the direction of the arrow IX in Figure 8, and
Figure 10 is a view taken in the direction of the arrow X in Figure 8.

The implement as shown in the drawings relates to a soil tilling machine combination, particularly one for the preparation of a seed bed.

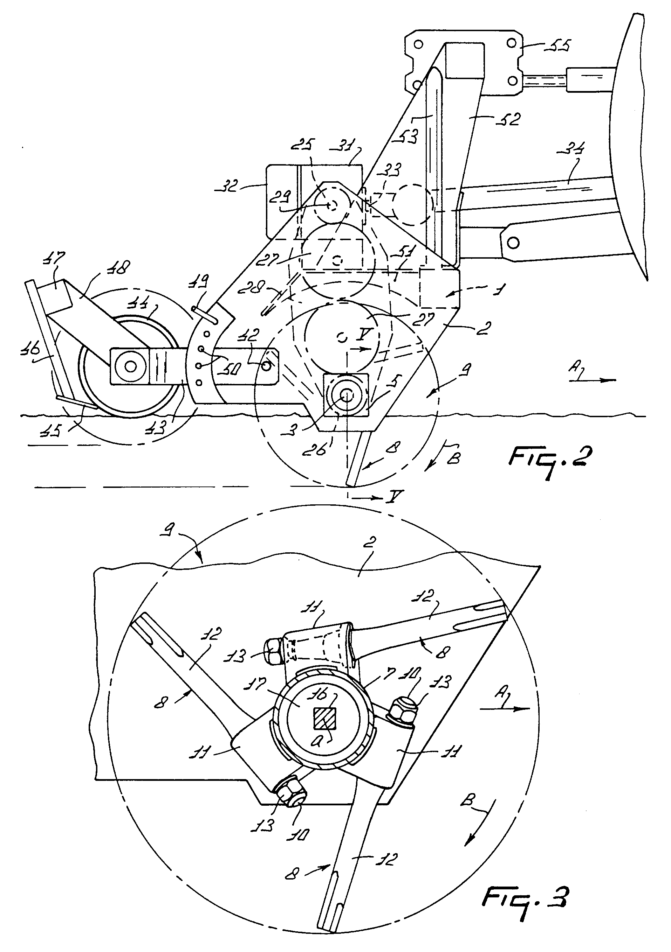

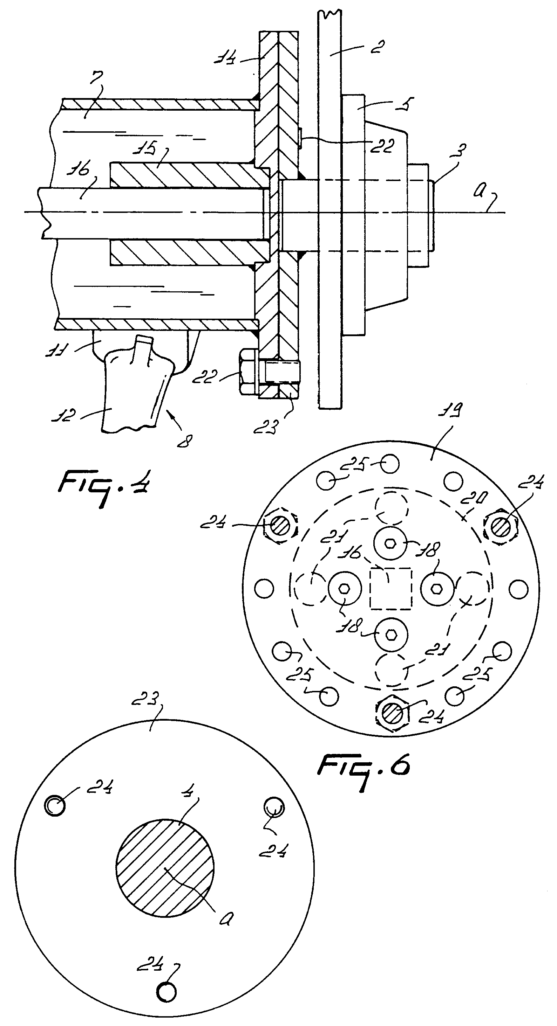

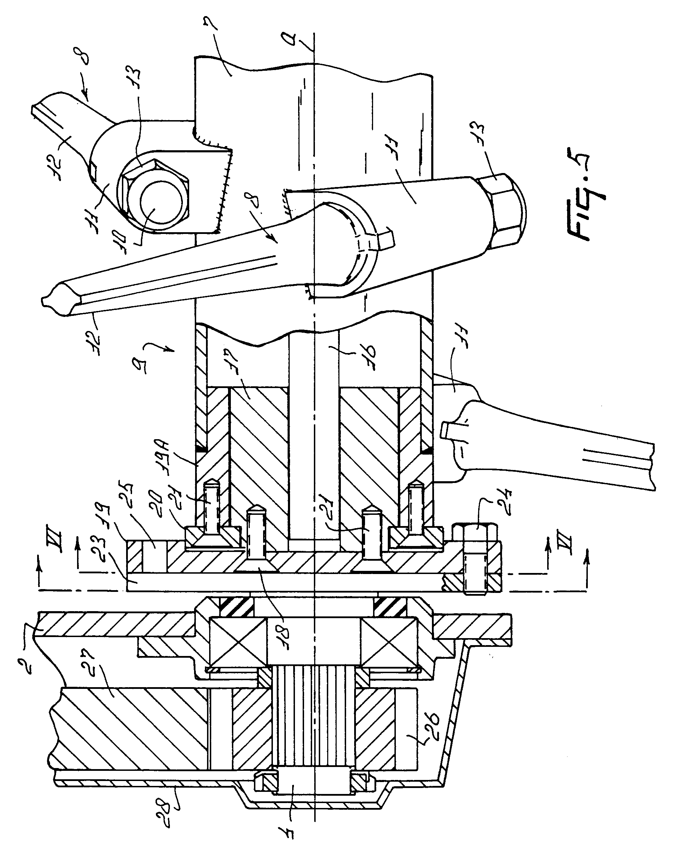

The machine comprises a frame including a frame beam 1, which frame beam extends transversely to the direction of operative travel A and is in an at least substantially horizontal position. To the ends of the frame beam 1 there are arranged plates 2, which extend rearwardly and at least substantially parallel to a vertical plane in the direction of operative travel A. As is apparent from Figure 2, each of the plates 2 is rhombic in shape and is arranged in such a manner that a connecting line between the corners of the rhomb extends at least substantially vertically. A tubular carrier 7 is supported in the lower corner of the rhomboidal plates 2 by means of shaft journals 3 and 4 which are supported in bearings accommodated in bearing housings 5 and 6 attached to the said plates. The tubular carrier 7 is provided with soil working members in the form of tines 8 and, together with these tines, constitutes a rotor 9. Taken in the longitudinal direction of the carrier 7, the tines 8 are arranged in accordance with a helix, while the point of connection of consecutive tines each time has been shifted through a peripheral angle of approximately 120° (Figure 3). Each of the tines 8 includes a connecting member 10 accommodated in a bushing 11 which is welded onto the tubular carrier 7 and bears there against by means of one side extending along the circumference thereof. The extension of the longitudinal centre line of a connecting member 10 of the respective tines 8 encloses an angle of approximately 8° with the longitudinal centre line of a straight active tine portion 12. The said centre lines are located in a plane which encloses an angle of approximately 10° with a plane perpendicular to the longitudinal centre line a of the tubular carrier 7. The longitudinal centre lines of consecutive tines 8 are located in planes which are situated on alternating sides of the said perpendicular plane (Figure 5). The active portion 12 of each tine 8 extends from the connecting member forwardly relative to the direction of rotation B imparted to a rotor 9 during operation (Figure 3). From its transition from the connecting member 10, each active tine portion 12 extends downwardly in the shape of a wedge having a cross-section which merges from oval into rhomboidal, the arrangement being such that the distance between the corners of the rhomb decreases towards the end and that, taken in the direction of rotation B, the distance is greater than that transversely thereto. At its lower end, each of the sides of the rhomboidal cross-section is provided with a recess which extends in the longitudinal direction of the active portion and which, at that side which relative to the direction of rotation B is the leading side, is approximately twice as long as that at the rear side (Figure 3). Each connecting member 10 is secured in the bushing 11 by means of a nut 13 which can co-operate with thread at the end projecting from the upper side of the bushing 11, and ridges. At its end facing the shaft journal 3, the tubular carrier 7 comprises a flange 14 which extends perpendicularly to the longitudinal centre line and in its centre is provided with an inwardly extending bushing 15.

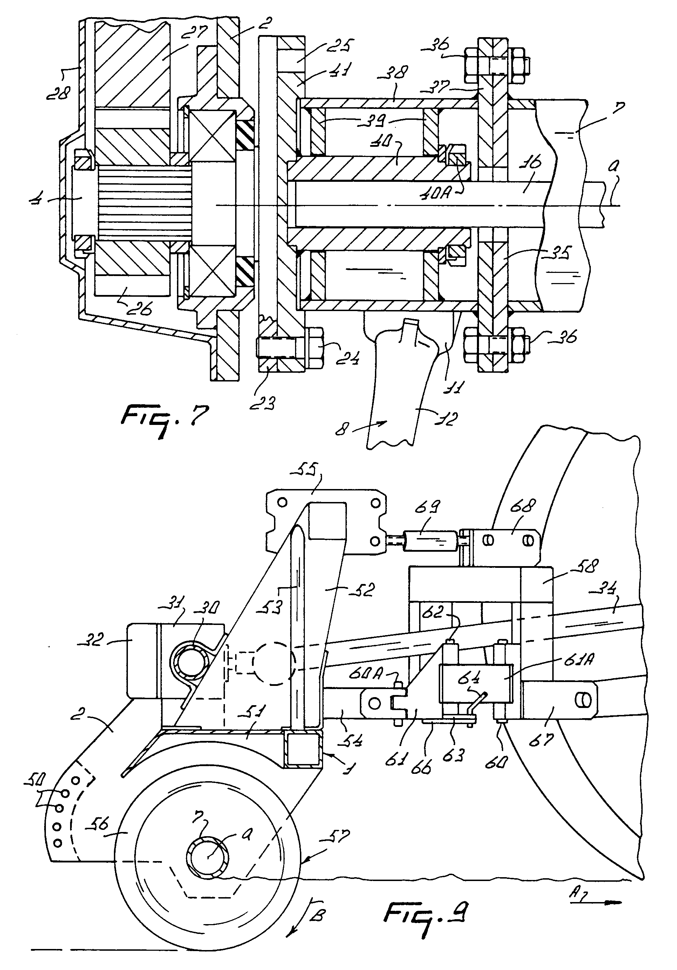

At its side remote from the tubular carrier 7, the bushing 19A is provided with a ring 20 which is secured by means of bolts 21 and fits in a corresponding recess at the inner side of the flange 19. By means of bolts 22, each of the flanges 14 and 19 is detachably connected to flanges 23 which are fitted to the inner sides of the shaft journals 3 and 4. The flange 14 is detachably connected to the flange 23 on the shaft journal 3 by means of three bolts 22 which are accommodated in apertures 24 arranged at peripheral angles of 120°. The flange 19 has a larger number of apertures 25, which are distributed uniformly along the entire periphery at peripheral angles of approximately 45°, while through each of the apertures there can be passed a bolt which can also be passed through the apertures 24 in the flange 23 on the shaft journal 4 (Figure 6). The presence of the larger number of apertures 25 in the flange 19 facilitates the exchange of the rotor 9 for one having different soil working members, e.g. discs, which other rotor will be described in detail hereinafter.

At the end of the shaft journal 4 extending beyond the plate 2 there is provided a gear wheel 26 which, via superposed larger gear wheels 27, is in a driving connection with an identical gear wheel 26. The upper gear wheel 26 is disposed, together with the other gear wheels, in a housing 28 and is arranged on a shaft 29 which extends transversely to the direction of operative travel A. The shaft 29 is accommodated in a tubular support 30 arranged between the upper sides of the plates 2. The tubular support 30 is formed of two sections which are contiguous to a transmission box 31 which is located near the centre and wherein one end of the shaft 29 projects. Inside the transmission box 31, the shaft 29 is in a driving connection, via a bevel gear transmission and a speed variator 32 located at the rear side of the transmission box 31, with a shaft 33 that extends in the direction of operative travel A. At the leading side, the shaft 33 projects from the transmission box 31 and is connectable to the power take-off shaft of a tractor via an intermediate shaft 34.

The rotatable connection between the tubular carrier 7 and the **shaft** 17 associated with the drive may be effected by means of the arrangement shown in Figure 7. In this situation, the relevant end of the tubular carrier 7 is provided with a flange 35 which, by means of bolts 36, is bolted to a flange 37 which is attached to one end of a tubular member 38 of the same diameter as the tubular carrier 7. Near its end remote from the flange 37 as well as at some distance therefrom, the tubular member 38 is provided with annular members 39 which are welded to, its inner side and extend perpendicularly to the longitudinal centre line a. Inside the annular members 39 there is rotatable with very little clearance a bushing 40, in which the end of the **shaft** 16 is fitted by means of a driving fit. The bushing 40 is welded to a flange 41 having a recess, within which the end of the tube section 38 extends with little clearance. At the inside, the bushing 40 is locked by a nut 40A at the side of an annular member 39 that faces the side of the flange 37. The flange 41 may be of a similar design as the flange 19 of the preceding arrangement and be secured to the flange 23 on the shaft journal 4. As is apparent from Figure 7, the tubular member 38 is provided with an outer tine 8.

By means of pins 42 whose longitudinal centre lines are in alignment, to each of the plates 2 there is arranged pivotably an arm 43, which arms extend rearwardly along the said plates. Between the ends of the arms 43 there is arranged freely rotatably a roller 44, which roller, in this embodiment, is designed as a packer roller provided with scrapers 45 which are located between crowns of cams arranged on a tubular carrier. The scrapers 45 are fitted to the lower ends of arms 46, which arms have their upper ends connected to a cross-beam 47 which extends at least substantially parallel to the axis of rotation of the roller and is secured to the arms 43 by means of supports 48. A pin 49, which can be passed through one of a plurality of apertures 50 in the plates 2, can prevent the arms 43 from moving upwardly relative to the plates, the arrangement being such that the working depth of the rotor 9 can be set by means of the roller 44 which bears on the soil during operation.

The upper side of the rotor 9 is surrounded by a cover 51. The frame beam 1 is provided with a portal trestle 52 which is arranged symmetrically relative to the centre and is connected to the ends of the frame beam 1 by means of supports 53. At its leading side, the portal trestle has connecting points 54, 55 for coupling to the three-point lifting hitch of a tractor.

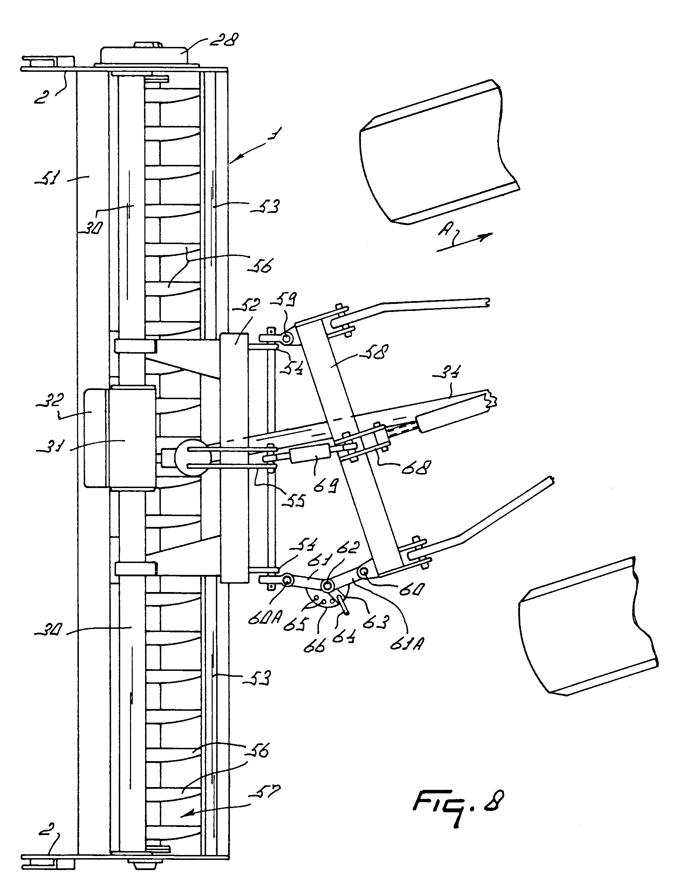

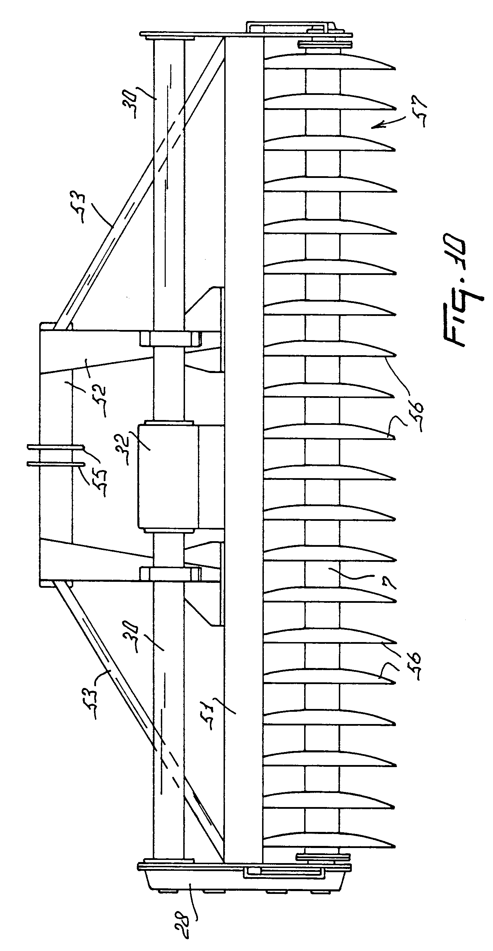

Figures 8 to 10 show an embodiment of a soil tilling machine combination according to the invention. In this embodiment, the component parts corresponding to those of the preceding example have been denoted by the same reference numerals. In this embodiment the machine does not include a roller 44, although, optionally, it may be applied. Although not shown, the machine may also be fitted with a ground wheel.

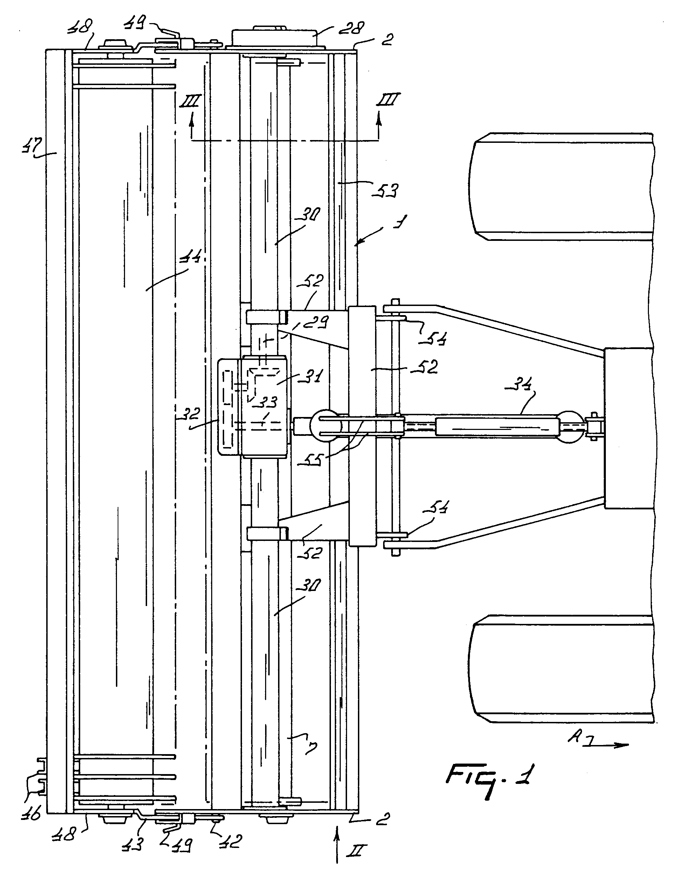

The tubular carrier 7 is provided with equidistantly arranged, disc-shaped soil working members 56 which, in this embodiment, are concave at the same side and whose circumference extends at least substantially parallel to a plane perpendicular to the longitudinal centre line a of the tubular carrier 7. The carrier 7 and the disc-shaped soil working members 56 together constitute a rotor 57. Like in the preceding example, the tubular carrier 7 is connected by means of flanges 14 and 19 so as to be exchangeable and e.g. replaceable by the tine-fitted rotor 9 of the combination shown in fig. 1.

At the leading side of the trestle 52 there may be provided, by means of the three-point connection 54, 55, a second trestle 58 which at one side at the bottom is connected via a hinge 59 to a lower connecting point 54 of the trestle 52 and by means of two plate-shaped arms 61 and 61A, which are arranged pivotably with the aid of pins 60 and 60A, to the other lower connecting point 54 of the trestle 52. The arms 61 and 61A, which are pivotably interconnected via a shaft 62, can be locked in a plurality of positions relative to each other by passing a pin 64 through an aperture in a lever 63 fitted to the arm 61A and through one of a plurality of apertures in a section 66 fitted to the arm 61. A result thereof, the second trestle 58 can be adjusted on the frame beam 1 of the machine to a variety of positions relative to the trestle 52. The upper end of the second trestle 58, which at its leading side is provided with a three-point connection 67, 68 for coupling to the three-point lifting hitch of a tractor, is connected to the upper coupling point 55 of the trestle 52 by means of a length-adjustable rod 69.

The machine in accordance with the embodiment as described in the foregoing operates as follows.

During operation, the machine is coupled to the three-point lifting hitch of the tractor by means of the three-point connection 54, 55 at the leading side of the trestle 52 and, via the intermediate shaft 34 and the above-described drive, the rotor constituted by the tubular carrier 7 and the tines 8 provided thereon can be driven in a direction as indicated by an arrow B in Figures 2 and 3. The tines 8 are arranged such that, relative to the direction of rotation B, they project forwardly, but, as has already been noted in the foregoing, the active portions 12 are directed rearwardly relative to the connecting members 10. With the aid of the respective tines 8, which, as has been described already, are arranged in the longitudinal direction of the tubular carrier in accordance with a helix and in consecutive planes, while enclosing an angle of approximately 10° with a vertical plane perpendicularly to the longitudinal centre line a of the tubular carrier 7, extend in the opposite directions (Figure 5), a soil working action can be obtained which results in an intensive crumbling.

As has been stated already, since at one end there is present a flange 19 having a relatively large number of apertures, it is possible to facilitate a connection to this end of the tubular carrier 7 after the other end thereof has been secured already by means of the flange 14. With the aid of the second trestle 58 in accordance with the last embodiment, the machine can optionally be adjusted such that the axis of rotation of the rotor 57 encloses an angle of a greater or lesser magnitude with the direction of operative travel A, so that, when the axis of rotation is located transversely, the discs produce a harrowing action and, when the axis of rotation is located at an oblique angle, they produce a ploughing action.

## Claims

1. A combination of a soil tilling machine and at least one power-drivable rotor (9), the soil tilling machine comprising a frame, means for mounting said power-drivable rotor (9), the axis of rotation (a) of which rotor extending substantially horizontally at an angle with a line transverse to the direction of operative travel (A), characterized in that the combination includes at least one additional power-drivable rotor (57) of a different type, while, the connecting means for mounting said rotors (9, 57) in the frame being all identical to each other, and whereby, in the operative state of the machine, one of these rotors (9, 57) is mounted in the frame.

2. A combination as claimed in claim 1, characterized in that the connecting means comprises flange means (14, 19) mounted to a rotor (9, 57) and flange means (23) mounted to the machine.

3. A combination as claimed in claim 1 or 2, characterized in that the flange means (14, 19) of a rotor (9, 57) and the flange (23) of the machine for exchanging rotors can be moved in upward direction along each other.

4. A combination as claimed in claim 2 or 3, characterized in that the flange means (14, 19, 23) are connectable to each other by means of one or more bolts (24).

5. A combination as claimed in any one of the claims 2 to 4, characterized in that one flange means (19) is provided with a larger number of apertures (25) for the bolts (24) than the other flange means (14).

6. A combination as claimed in any one of the preceding claims, characterized in that a rotor (57) formed by a tubular carrier (7) with discs (56), can be exchanged with a rotor (9) with a carrier (17) with outwardly extending soil working members (8).

7. A combination as claimed in claim, 6, characterized in that the discs (56) are hollow at the same side and at the circumference extend parallel to a plane perpendicular to the axis of rotation (a) of the rotor (57).

8. A combination as claimed in any one of the preceding claims, characterized in that a second trestle (58) is connectable to a first trestle (52) present on the frame of the machine, which second trestle (58) can be adjusted to a plurality of positions around an upwardly extending shaft (59) relative to the first trestle (52) on the frame.

9. A combination as claimed in claim 8, characterized in that the upwardly extending shaft (59) is disposed between a lower coupling point (54) of the first trestle (52) on the frame of the machine and the second trestle (58), whilst arms (61, 61A) which are provided pivotally relative to each other are located between the other lower coupling point (54) and the second trestle (58), the arrangement being such that the position of the second trestle (58) is adjustable relative to the first trestle (52) on the frame of the machine.

## Patentansprüche

1. Kombination aus einer Bodenlockerungsmaschine und mindestens einem zwangläufig angetriebenen Rotor (9), wobei die Bodenlockerungsmaschine einen Rahmen und Anschlüsse für den zwangläufig angetriebenen Rotor (9) aufweist, dessen Drehachse (a) sich im wesentlichen in horizontaler Richtung erstreckt und mit einer quer zur Arbeitsrichtung (A) verlaufenden Geraden einen Winkel bildet,
dadurch gekennzeichnet, daß die Kombination mindestens einen zusätzlichen zwangläufig angetriebenen Rotor (57) unterschiedlichen Typs aufweist, wobei die Anschlüsse für die Rotoren (9, 57) an dem Rahmen gleich ausgebildet sind, und wobei einer dieser Rotoren (9, 57) im Betriebszustand der Maschine an den Rahmen angeschlossen ist.

2. Kombination nach Anspruch 1,
dadurch gekennzeichnet, daß die Anschlüsse an einem Rotor (9, 57) angebrachte Flansche (14, 19) und an der Maschine angebrachte Flansche (23) aufweist.

3. Kombination nach den Ansprüchen 1 oder 2,
dadurch gekennzeichnet, daß die Flansche (14, 19) eines Rotors (9, 57) und der Flansch (23) der Maschine zum Austauschen von Rotoren aneinander entlang nach oben zu bewegen sind.

4. Kombination nach den Ansprüchen 2 oder 3,
dadurch gekennzeichnet, daß die Flansche (14, 19, 23) mittels eines oder mehrerer Bolzen (24) miteinander zu verbinden sind.

5. Kombination nach einem der Ansprüche 2 bis 4,
dadurch gekennzeichnet, daß ein Flansch (19) mehr Öffnungen (25) zur Aufnahme der Bolzen (24) aufweist als der andere Flansch (14).

6. Kombination nach einem der vorhergehenden Ansprüche,
dadurch gekennzeichnet, daß ein Rotor (57), der durch einen rohrförmigen Träger (7) mit Scheiben (56) gebildet ist, gegen einen Rotor (9) auszutauschen ist, der einen Träger (17) mit nach außen gerichteten Bodenbearbeitungsgliedern (8) aufweist.

7. Kombination nach Anspruch 6,
dadurch gekennzeichnet, daß alle Scheiben (56) auf derselben Seite konkav ausgebildet sind und sich mit ihrer Peripherie parallel zu einer Ebene erstrecken, die senkrecht zu der Drehachse (a) des Rotors (57) verläuft.

8. Kombination nach einem der vorhergehenden Ansprüche,
dadurch gekennzeichnet, daß an einen ersten, an dem Rahmen der Maschine vorgesehenen Anbaubock (52) ein zweiter Anbaubock (58) anzuschließen ist, der in bezug auf den an dem Rahmen befindlichen ersten Anbaubock (52) um eine aufwärts gerichtete Achse (59) in mehrere Positionen einzustellen ist.

9. Kombination nach Anspruch 8,
dadurch gekennzeichnet, daß die aufwärts gerichtete Achse (59) zwischen einem unteren Anschlußpunkt (54) des ersten Anbaubockes (52) an dem Rahmen der Maschine und dem zweiten Anbaubock (58) angeordnet ist, während zwischen dem anderen unteren Anschlußpunkt (54) und dem zweiten Anbaubock (58) Arme (61, 61A) schwenkbar zueinander angeordnet sind, wobei die Anordnung so getroffen ist, daß die Position des zweiten Anbaubockes (58) relativ zu dem an dem Rahmen der Maschine befindlichen ersten Anbaubock (52) einstellbar ist.

## Revendications

1. Combinaison d'une machine de labour du sol et d'au moins un rotor (9) pouvant être entraîné à partir d'un moteur, la machine de labour comprenant un châssis, des moyens pour le montage dudit rotor (9) pouvant être entraîné à partir d'un moteur, l'axe de rotation (a) de ce rotor s'étendant sensiblement horizontalement selon un angle avec une ligne transversale au sens de marche (A) du travail,
**caractérisée** en ce que la combinaison comprend au moins un rotor (57) supplémentaire d'un type différent, pouvant être entraîné à partir d'un moteur, tandis que les moyens de liaison pour le montage desdits rotors (9, 57) dans le châssis sont tous identiques les uns aux autres et que, dans l'état de fonctionnement de la machine, un de ces rotors (9, 57) est monté dans le châssis.

2. Combinaison selon la revendication 1, caractérisée en ce que les moyens de liaison comprennent des moyens à flasques (14, 19) montés sur un rotor (9, 57) et des moyens à flaques (23) montés sur la machine.

3. Combinaison selon la revendication 1 ou 2, caractérisée en ce que les moyens à flasques (14, 19) d'un rotor (9, 57) et le flasque (23) de la machine pour l'échange de rotors peuvent être déplacés vers le haut le long l'un de l'autre.

4. Combinaison selon la revendication 2 ou 3, caractérisée en ce que les moyens à flasques (14, 19, 23) peuvent être reliés entre eux au moyen d'un ou plusieurs boulons (24).

5. Combinaison selon l'une quelconque des revendications 2 à 4, caractérisée en ce qu'un moyen à flasque (19) est prévu avec un nombre d'ouvertures (25) pour les boulons (24) plus grand que celui de l'autre moyen à flasque (14).

6. Combinaison selon l'une quelconque des revendications précédentes, caractérisée en ce qu'un rotor (57) formé par un élément porteur tubulaire (7) avec des disques (56) peut être échangé contre un rotor (9) avec un élément porteur (17) avec des organes de travail du sol (8) s'étendant vers l'extérieur.

7. Combinaison selon la revendication 6, caractérisée en ce que les disques (56) sont concaves du même côté et en ce que leur circonférence s'étend parallèlement à un plan perpendiculaire à l'axe de rotation (a) du rotor (57).

8. Combinaison selon l'une quelconque des revendications précédentes, caractérisée en ce qu'un deuxième chevalet (58) peut être relié à un premier chevalet (52) présent sur le châssis de la machine, lequel deuxième chevalet (58) peut être réglé en une pluralité de positions autour d'un arbre (59) s'étendant vers le haut par rapport au premier chevalet (52) sur le châssis.

9. Combinaison selon la revendication 8, caractérisée en ce que l'arbre (59) s'étendant vers le haut est disposé entre un point inférieur (54) de couplage du premier chevalet (52) sur le châssis de la machine et le deuxième chevalet (58), tandis que des bras (61, 61A) qui sont prévus pivotants l'un par rapport à l'autre sont situés entre l'autre point inférieur (54) de couplage et le deuxième chevalet (58), l'agencement étant tel que la position du deuxième chevalet (58) est réglable par rapport au premier chevalet (52) sur le châssis de la machine.
